# EUROPEAN PATENT APPLICATION

(11) **EP 1 865 689 A1**
(43) Date of publication of application: **12.12.2007**
(21) Application number: 06115236.9
(22) Date of filing: 09.06.2006
(51) Int. Cl.: H04L 29/12, H04L 29/08, H04B 5/00

(54) **Communication method between a telecommunication wireless device supporting a local web server and a remote contactless device**

(71) Applicant: Nec Technologies (UK) Limited, Reading, Berkshire RG2 0TD (GB)
(72) Inventor: Hubert, Hélaine, 78560, Andresy (FR); Fok, Frédéric, 34270, Sant Mathieu de Treviers (FR)
(74) Representative: Poulin, Gérard

(57) **Abstract**

The invention relates to a communication protocol allowing data transfer between a telecommunication wireless device (2) supporting a local web server (10) and at least a remote contactless device (20) comprising web resources of different types intended to be accessed by said telecommunication wireless device (20).

In the protocol according to the invention, the resources are stored in the remote contactless device in a first data structure (30) comprising:
a- at least a generic resource record designed to identify the type of a web resource stored in said remote contactless device,
b- an identification field that references said data structure as a Uniform Resource Identifier (URI) in order to allow linkage and access to the web resources stored in the remote contactless device (20).

## Description

### TECHNICAL DOMAIN

The present invention concerns a communication protocol allowing data transfer between a telecommunication wireless device supporting a local web server and at least a remote contactless device comprising web resources of different types intended to be accessed by said telecommunication wireless device.

The invention concerns also a telecommunication wireless device and a contactless device supporting said protocol.

### STATE OF PRIOR ART

In the Near Field Communication technology context, a NFC tag can store information about web resources to be accessed by a NFC Forum^{®} Device. When a user touches the NFC Forum^{®} Device to the tag, the web resources stored in said tag can be read and displayed in the mobile web browser.

Storing web resources in a NFC tag needs relevant format and allows users to access web pages - that might contain extra web links- by using the touch and explore approach.

Figure 1 represents an architecture disclosed in the French patent application N° 06 50344 in which wireless telecommunication equipment 2 comprising a web server 10 as a proxy may access to resources stored on a remote contactless device 20 in a Near Field Communication technology context.

In such architecture, if the web resources stored in the NFC tag 20 have different complex types, each of them will require the use of a specific interface and specific format storage and a specific communication protocol to be accessed.

This solution is not adapted to the NFC Forum^{®} context due to very limited space available to store data in the tags and to the absence of CPU in said tags.

An object of the present invention is to overcome the above described drawback.

### PRESENTATION OF THE INVENTION

The invention provides a communication protocol for easy and fast exploration by a wireless mobile device of the web pages stored in a remote contactless device.

The object of the invention is achieved by means of a communication protocol allowing data transfer between a telecommunication wireless device supporting a local web server and at least a remote contactless device comprising web resources of different types intended to be accessed by said telecommunication wireless device.

According to the invention, the web resources are stored in the remote contactless device in a data structure comprising:
a- at least a generic resource record designed to identify the type of a web resource stored in said remote contactless device,
b- an identification field that references said data structure as a Uniform Resource Identifier (URI) in order to allow linkage and access to the web resources stored in the remote contactless device.

Preferably, said data structure further includes at least a second data structure having the same format as said first data structure and comprising at least a generic resource record.

In a preferred embodiment of the invention, said first and second data structures are NFC (Near Field Communication) Web records designed in a NDEF format (Near Field Communication Data Exchange Format) and each generic resource record includes a media-type record identifying a web resource type.

In a particular example of implementation, the media-type record is a type as defined in RFC 2046.

Preferably, each generic resource record includes an identification field that references said resource as a Uniform Resource Identifier (URI) in order to allow linkage and access to the web resources stored in the remote contactless device.

Moreover, said generic resource record further comprises at least a meta-information record that provides extra information about said resource record.

Thanks to the protocol according to the invention, it is possible to associate each resource in NFC forum data exchange format to an URI and to identify the type of said resource.

In a first embodiment, the Web Resources are organized in a hierarchical structure that also supports ISO7816-4 files references and the NFC Web record may be at the top level of said hierarchical structure.

The ID field of the NFC Web record is an URI in the form of [Protocol]://localhost/[access-path] so that the client can retrieve the information.

The field "Protocol" may represent HTTP, FTP, RTP or RTSP ...

In a second embodiment, the NFC Web record is included in a predefined Smart Poster record. In this case the NFC Web record overrides said Smart Poster record.

The protocol of the invention provides:
- a way to associate meta data to a resource in NFC forum data exchange format;
- a way to support hierarchy for the web structure in NFC forum data exchange format;
- a way to address a sub-web in ISO-7816-4 file system using an URI.

### BRIEF DESCRIPTION OF THE FIGURE

The forgoing summary, as well as the following detailed description, will be better understood when read in conjunction with the appended figures in which:
- figure 1 represents a mobile device comprising a web server as a proxy and a remote contactless device comprising Web resources;
- figure 2 is a tree structure illustrating the rules when applying an URI in an ID field for hierarchical storage according to the invention,
- figure 3 is a hierarchical NDEF Structure organization for web resources according to the invention,
- figure 4 represents NDEF Record layout for NFC Web according to the invention,
- figure 5 represents NDEF Record layout for Resource record according to the invention,
- figure 6 represents NDEF record layout for Meta Information record according to the invention.

### DETAILED PRESENTATION OF PARTICULAR EMBODIMENTS

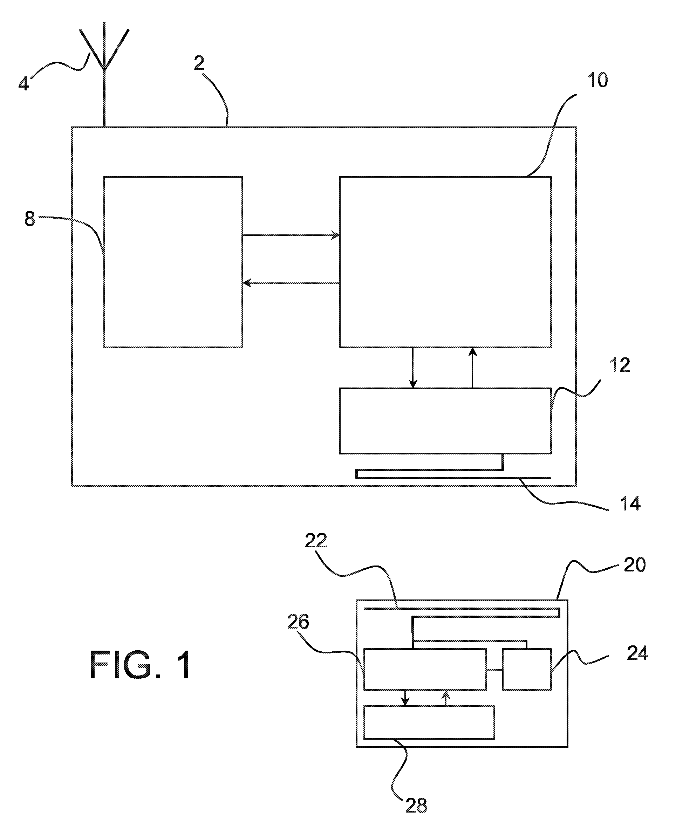

Figure 1 shows a mobile device 2 comprising an RF antenna 4 for communicating with a wired network, a transceiver module (not represented), a browser 8, web server 10 as a proxy, an initiator module 12 such as an RFID (Radio Field Identification) reader or a smartcard reader coupled to a antenna 14 for communicating with an NFC (Near Field Communication) remote contactless target device 20 such as a RFID tag or a smartcard. Said NFC target device 20 comprises an antenna 22, a power supply module 24 using the incidental wave energy received by the antenna 22, a modulator 26 and non-volatile memory 28 comprising an NFC Web built around specific Resources and file system to reference the information to be accessed by the mobile device 2.

According to the invention, the web resources are stored in the target device 20 in a first data structure 30 comprising at least a generic resource record designed to identify the type of a web resource stored in said remote contactless device 20, and an identification field that references said data structure 30 as a Uniform Resource Identifier (URI) in order to access to said web resources stored in the remote contactless device 20.

The NFC Web can be stored in many different formats such that the Web Resources can contain data in the SSML (Speech Synthesis Markup Language) format to consolidate the role of the voice on the web and enhance multimodal interactions in mobile, data in SVG (Scalable Vector Graphic) format to add vectorial images and enhance user experience on mobile web browsing, and/or data in XHTML (Extensible HyperText Markup Language) format, XML (Extensible Markup Language) format, etc ... that would be displayed in a web browser. The Web Resources are organized in a hierarchical structure that supports ISO 7816-4 files references and the NFC Web record may be at the top level of said hierarchical structure.

In a preferred embodiment, The NFC Web record is defined by setting TNF field value to 0x01 as defined by NDEF specification (Near Field Communication Data Exchange Format) and RTD Specification (Record Type Description)). The type names are used to identify the record: the NFC Web 'root' record, sub-NFC Web records, web resource records, meta-information records. Hex values for Type Names values in case of NFC Forum well known type are listed in the following table:

| Decimal | hex | Resource target | Resource type |
|---|---|---|---|
| 0 | 0x00 | No pretending | N/A. no type defined. |
| 1 | 0x57 | NFC Web | :W |
| 2 | 0x52 | Web Resource | :R |
| 3 | 0x4D, 0x49 | Meta Information | :MI |
| 4- 255 | 0x04 - 0xFF | Reserved for future use. | RFU |

The ID field is composed of:
- a non mandatory Code Identifier that indicates the protocol used,
- a non mandatory specific entry path field value,
- and the rest of the URI.

The ID field value is used to identify the resource (URI) for linkage purpose (e.g. utilized by a HTTP client to access the information).

In order to be able to carry out a management of a mixed system of contents such as NFC Web RTD and ISO 7816-4 for example, it is necessary to identify the resources according to the system of organization of those resources.

So, according to the invention, a specific URI for Smart Card path identification for local resources (scURI) is proposed to allow managing local web resources located either in NFC tag or UICC (Universal Integrated Circuit Card), via a transport protocol such as HTTP, according to their organization in the chart.

In this context the ID field structure is computed from the scURI scheme.

The scURI is a proposed URI which consists in a local address of documents and other resources on smart cards: <scheme>://localhost/<e_path><path>

URL scheme uses the generic URL syntax since it is intended to be used with relative URLs.

The scheme can be parsed according to RFC 2396 and is associated with network protocols (e.g. http: scheme).

<e_path> is the entry_path to determine the smartcard before the system fetches the resources in the rest of the <path>.

For instance a HTTP Get request would be: GET http://localhost/NFC/<path> HTTP/1.1 where:
- http:// is the protocol identifier
- "localhost/NFC" is an e_path identifier
- <path> is the rest of URI

The default e_path value is 0x01 (localhost/NFC).

Since web resources are accessed locally, the domain name is implicit and is "localhost/".

Concerning ISO 7816-4 files storage, ID record field value depends on two file referencing methods (ISO/IEC 7816-4: 1995):
- Absolute reference of Master File ("3F00" value).
- Absolute reference of current Web Server application ("7FFF" value).

The e_path values are listed in the following table:

| Decimal | Hex | Resource type |
|---|---|---|
| 0 | 0x00 | No e_path value |
| 1 | 0x01 | "localhost/NFC" |
| 2 | 0x02 | "localhost/ISO7816" |
| 3 | 0x03 | "localhost/ISO7816/3F00" |
| 4 | 0x04 | "localhost/ISO7816/7FFF" |
| 5-255 | 0x05-0xFF | RFU |

According to an aspect of the invention, an identification field references the data structure used for storing and accessing the web resources as a Uniform Resource Identifier (URI) in order to allow linkage and access to said web resources stored in the remote contactless device. The ID field structure approach uses part of the table of values as defined in URI RTD (Record Type Description) given in the table below.

| Name | Offset | Size | Value | Description |
|---|---|---|---|---|
| Identifier code | 0 | 1 byte | Protocol identifier code (e.g http://) | The URI identifier code, |
| e_path identification | 1 | 1 byte | Entry_path identifier code (e.g. localhost/NFC) | The entry path that identifies the smart card associated to the resources path that follows the entry_path in the URI field. |
| URI field | 2 | N bytes | UTF-8 string | The rest of the URI, or the entire URI (if identifier code is 0x00) which is dealt with by the supplier |

- The Identifier code field indicates what protocol to use.

If 0x00 is set, then full URI (absolute or relative) should be written in URI Field and e_path must be ignored.
- the e_path identifier indicates the entry path used in smart card in order to determine how to access the resources.
- e_path value is used for absolute URI only when identifier code field is different from 0x00.
- URI field is the rest of the URI.

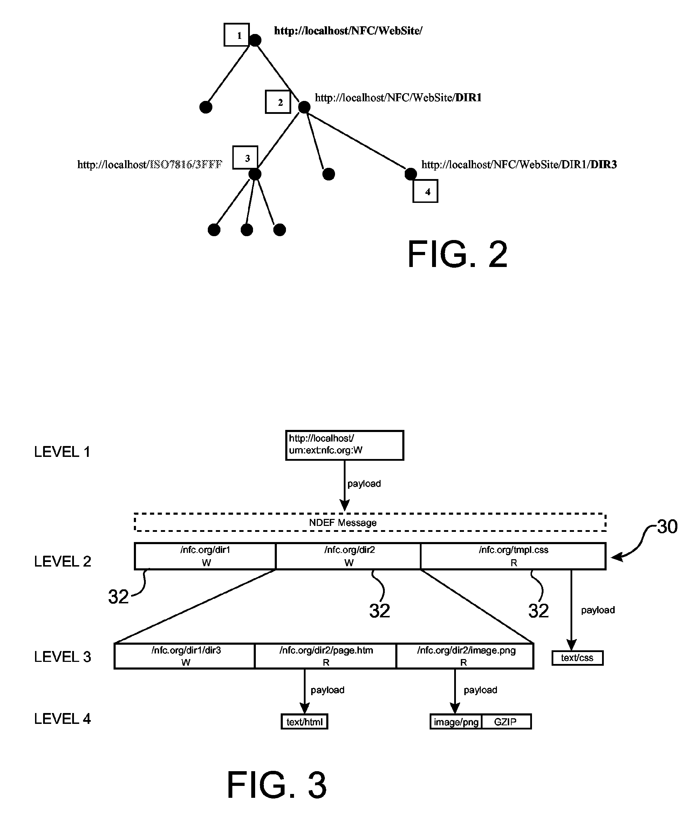

Figure 2 shows the general rules to create the hierarchy of records.

The first "node" is a record whose ID field must be an absolute URI.

If the Identifier code of this first node is different from 0x00, e_path is equal to any e_path identifier code; else, if Identifier code is equal to 0x00, e_path is equal to 0x00 and must not be managed. In this case, URI field must contain the absolute path.

Other "child nodes" are records whose ID field should adopt relative syntax:
- If Identifier code is equal to 0x00 and e_path equal to 0x00. URI field thus contains a relative URI.
- If Identifier code is different from 0x00, then the child node is an absolute URI. Consequently there are two meanings:
   It is the "root node" of a new hierarchy of records and its value follows the first "node" rules,
   It is an "absolute" node whose value indicates an absolute path,
- ISO 7816 URI field syntax: - HEX values are ASCII coded and must take 2 bytes (eg 3FFF).

In case of short file identifier (SFID) (1byte), it is still 2 bytes coding and the first byte must be equal to zero (for instance. 0x00, OxYY where YY is the SFID) .

Figure 3 illustrates a web resource structure description according to the invention in which the first level is the NFC Web record (W) which contains a list of Resource records. The ID field value is equal to "http://localhost/nfc.org"

The second level shows the URI Identifier records whose type name gives the context (a web page, an image, or a NFC Web in current illustration, (Audio, Video, Application, and Multipart are not illustrated)) .

The third level shows the records contained in a NFC Web record (W) whose ID field value is "/nfc.org/dir2" and a MIME record included in a Resource record (R) whose ID value is "/nfc.org/tmpl.css" (absolute path).

The NFC Web record is specific and is dedicated to organize the web site. It serves as a directory that can contain Resource records as illustrated by figure 3.

Referring to figure 3, the Resource record (R) whose ID value is "/nfc.org/dir2/page.htm" (absolute path) contains xhtml content that would be displayed in a browser. The Resource record (R) contains the style sheet (/nfc.org/tmpl.css).

The record (R) contains a MIME record whose ID value is "/dir2/image.png" (absolute path and an 'Encoded' record that describes its compression (gzip).

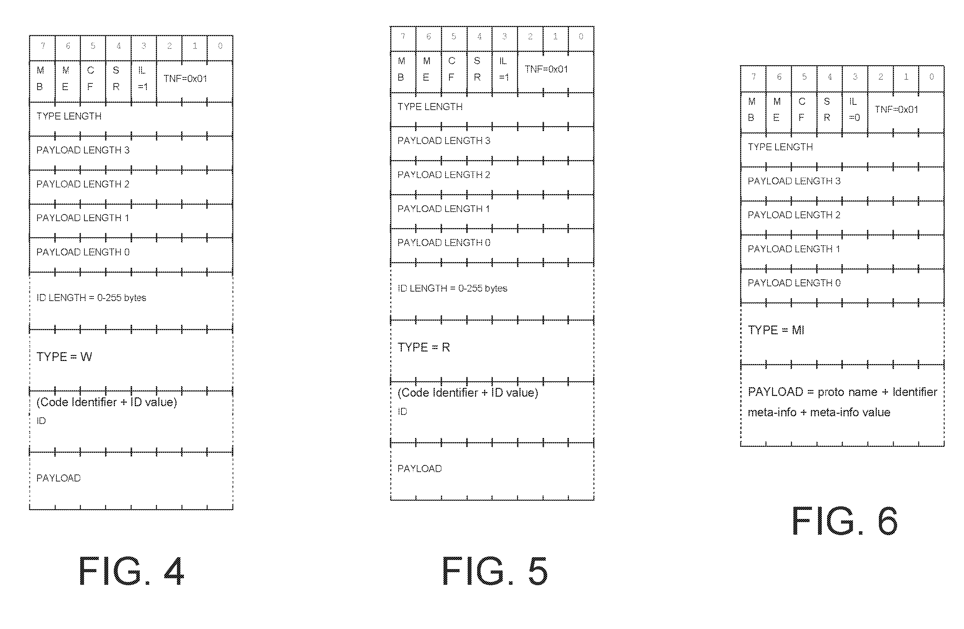

The NDEF Record layout for NFC Web records according to the invention is represented in figure 4. As shown in this figure 4, the data structure of the NFC Web records comprises:
- a specific ID Field composed of:
   - a first one byte field and an identifier Code value which identifies the protocol used,
   - a second one byte field and the e_path Code value which identifies the smartcard before the system fetches the resource in the rest of the path, and
   - a third N bytes field (The rest of the path Code value) which indicates the rest of the URI (N = Id Length -2).
   It is to be noted that the ID field value (URI) enable to read only part of the entire web resources. So implementers may only retrieve first two levels and register the Id field value of the third level records to allow future reading operation with the remote device.
- a type field whose value is a new one which indicates that the NDEF record is a NFC Web Record.
- a payload whose content consists in NFC Web records and/or Resource records it does assume any particular order.

It is to be noted that there can be other records which would be treated in an application-specific manner without departing from the scope of the invention.

The payload consists in a NDEF message, a list of Resource records.

The NDEF Record layout for Resource record according to the invention is represented in figure 5.

As shown in figure 5, the Resource Record data structure comprises:
- a field IL set to "1" in order to enable use of ID Field. As a consequence, the ID Length and ID fields must be present in the NDEF record structure.
- a specific ID Field is required to reference a web resource as a Uniform Resource Identifier. It is composed of:
   - a first one byte field for the identifier Code value which identifies the protocol used.
   - a second one byte field for the e_path Code value which identifies the smartcard before the system fetches the resource in the rest of the path,
   - a third N bytes field (The rest of the path Code value) which indicates the rest of the URI (N = ID Length - 2).

It is to be noted that this URI information could have been added as a meta-information in the payload of this Resource Record. Nevertheless it has been added in the ID Field of this NDEF record. This is an optimization that reduces the number of bytes to store in the device. Besides it also avoid exploring the payload to determine its URI.

For example, one can just read the Resource Record and its URI without reading the payload. In this case the user knows the address of the web resource but has not yet retrieved its content.

The Resource Record data structure further comprises:
- a type field the value of which indicates that the NDEF record is a Resource Record,
- a payload the content of which consists in a Mime Type record (as defined by NFC Forum) and extra Meta-Information records (whose structure is described below) it does assume any particular order.

It is to be noted that there can be other records which would be treated in an application-specific manner without departing from the scope of the invention.

The NDEF record layout for Meta Information record according to the invention is represented in figure 6.

As shown in figure 6, said Meta Information Record comprises:
- a type field the value of which indicates that the NDEF record is a Meta Information Record.
- a payload whose structure is defined such as it allows storage of any extra information about a web resource, said structure comprising:
   - One first byte for the protocol name field used to identify the protocol used to transport the meta-information associated to the resource. For example, it could be HTTP protocol that would indicates that the meta-information is transported via HTTP protocol
   - One second byte for the meta-information type field used to identify the meta-information type.
   - One third N bytes for meta-information type value field that gives the value associated to the meta-information type field (N = Payload Length - 2).

It is to be noted that if the protocol name field has a value equal to HTTP, then the meta-information type are HTTP header names. Moreover, when meta-information is HTTP header information, it would just be relayed by a web server in a mobile device. A table of Hex values has been given and indicates the HTTP Headers values to use in the case of HTTP protocol.

The Meta Information Record further comprises:
- a payload, which is not a NDEF message, for indicating the transport mode, the type, and the value of said meta-information.

An example of such Meta Information Record is:
Protocol: HTTP
Type: Content-Type
Value: text/html

This record has no interest in ID field. It just brings information on a resource. It has not to be referenced so IL field value should be equal to 0. Thus this record has no ID field and no ID Length field.

This record should be a short record (SR=1), thus the Payload Length field indicating the length of the payload should occupy 1 byte.

This payload is illustrated by the following table:

| Name | Offset | Size | Value | Description |
|---|---|---|---|---|
| Proto identifier | 0 | 1 byte | Protocol identifier code | The protocol name |
| meta-info Identifier | 1 | 1 byte | Meta-info identifier code | The meta-information name |
| Meta information value | 2 | N | UTF-8 string | The meta-information value |

One byte is reserved to identify the protocol used to transport the web resource.

One byte is reserved to determine the meta-information name. The size left (N) is used to store the value associated to the meta-information name. Payload length = (N +2)

## Claims

1. A communication protocol allowing data transfer between a telecommunication wireless device (2) supporting a local web server (10) and at least a remote contactless device (20) comprising web resources having different types intended to be accessed by said telecommunication wireless device (2), **characterized in that** said web resources are stored in the remote contactless device (20) in a first data structure (30) comprising:
a- at least a generic resource record designed to identify the type of a web resource stored in said remote contactless device (20),
b- an identification field that references said data structure (30) as a Uniform Resource Identifier (URI) in order to allow linkage and access to said web resources stored in said remote contactless device (20).

2. Protocol according to claim 1 wherein, said identification field is an URI in the form of [Protocol]://localhost/[access path].

3. Protocol according to claim 1 or 2 **characterized in that** it further comprises at least a second data structure (32) having the same format as said first data structure and comprising at least a generic resource records.

4. Protocol according to claim 1, 2, or 3 wherein said first (30) and second (32) data structures are NFC (Near Field Communication) Web records designed in a NDEF format (Near Field Communication Data Exchange Format).

5. Protocol according to claims 1 or 2 wherein each generic resource record comprises an identification field that references said resource as a Uniform Resource Identifier (URI) in order to allow linkage and access to the web resources stored in the remote contactless device (20).

6. Protocol according to claim 5 wherein each generic resource record further comprises a media-type record identifying a web resource type.

7. Protocol according to claim 4 and 6 wherein said Resource record is designed according to NDEF format.

8. Protocol according to claim 3 or 4 wherein said Web Resources are organized in a hierarchical structure.

9. Protocol according to claim 6 wherein each of said generic Resource record comprises further at least a meta-information record which is independent of the record to be directly relayed by the local web server (10) and which provides extra information about said resource record.

10. Protocol according to claim 7 and 9 wherein said meta-information record is designed according to NDEF format.

11. Protocol according to claims 6 wherein said media-type record is an RFC 2046 type.

12. Protocol according to claim 4 wherein the NFC web record data structure comprises:
- a field IL set to "1" in order to enable use of the ID Field,
- a specific ID Field composed of:
• a first one byte field for an identifier Code value which identifies the protocol used,
• a second one byte field for the e_path Code value which identifies the remote contactless device (20) before the system fetches the resource in the rest of the path, and
• a third N bytes field (The rest of the path Code value) which indicates the rest of the URI (N = ID Length - 2).
- a type field the value of which indicates that the NDEF record is a NFC Web Record.
- a payload the content of which consists in NFC Web records and/or Resource records it does assume any particular order.

13. Protocol according claim 7 wherein the Resource Record data structure comprises:
- a field IL set to "1" in order to enable use of ID Field,
- a specific ID Field for referencing a web resource as a Uniform Resource Identifier, said ID Field comprising:
• a first one byte field for the identifier Code value which identifies the protocol used.
• a second one byte field for the e_path Code value which identifies the remote contactless device (20) before the system fetches the resource in the rest of the path,
• a third N bytes field (The rest of the path Code value) which indicates the rest of the URI (N = ID Length - 2).
- a type field the value of which indicates that the NDEF record is a Resource Record,
- a payload the content of which consists in a Mime Type record as defined by NFC Forum and extra Meta-Information records.

14. Protocol according the claim 10 wherein said Meta-Information Record comprises:
- a type field the value of which indicates that the NDEF record is a Meta-Information Record.
- a payload whose structure is defined such as it allows storage of any extra information about a web resource, said structure being composed of:
• One first byte for the protocol name field for identifying the protocol used to transport the meta-information associated to the resource,
• One second byte for the meta-information type field for to identifying the meta-information type,
• One third N bytes for the meta-information type value field that gives the value associated to the meta-information type field (N = Payload Length - 2).
- a payload, which is not a NDEF message, for indicating the transport mode, the type, and the value of said meta-information.

15. Protocol according to claims 4 wherein said NFC Web record may be at the top level of a NDEF message or included in the Smart Poster record.

16. Protocol according to claims 15 wherein, when the telecommunication wireless device supports NFC web records features and if the NFC Web record is included in the Smart Poster record, said NFC Web record overrides said Smart Poster record.

17. Protocol according to claim 8 wherein the NFC web hierarchical structure is designed such that it supports ISO7816-4 files references.

18. Protocol according to claims 1 to 17 wherein the telecommunication wireless device (2) is a mobile phone, pocket PC or a laptop and the remote contactless device is a smartcard, a memory card or a second telecommunication wireless device.

19. Protocol according to claims 1 to 18 **characterized in that** it enables local web server (10) to support the HTTP transport protocol.

20. Protocol according to claims 1 to 18, **characterized in that** it enables local web server (10) to support the FTP transport protocol.

21. Protocol according to claims 1 to 18, **characterized in that** it enables local web server (10) to support the RTP transport protocol.

22. Protocol according to claims 1 to 18, **characterized in that** it enables local web server to support the RTSP transport protocol.

23. A telecommunication wireless device (2) supporting an local web server comprising means for accessing to web resources having different types stored in a first data structure (30) in a remote contactless device (20), **characterized in that** said data structure (30) comprises
a- at least a generic resource record designed to identify the type of a web resource stored in said remote contactless device,
b- an identification field that references said data structure as a Uniform Resource Identifier (URI) in order to allow linkage and access to the web resources stored in the remote contactless device (20).

24. A Remote contactless device (20) comprising web resources having different types stored in a first data structure (30) accessible by a telecommunication wireless device (2) supporting a local web server, **characterized in that** said data structure comprises
a- at least a generic resource record designed to identify the type of a web resource stored in said remote contactless device (20),
b- an identification field that references said data structure as a Uniform Resource Identifier (URI) in order to allow linkage and access to the web resources stored in the remote contactless device (20).

## Amended claims

### Amended claims in accordance with Rule 86(2) EPC.

**1.** A communication protocol allowing data exchange between a telecommunication wireless device supporting a local web server and at least a remote contactless device comprising web resources having different types intended to be accessed by said telecommunication wireless device, said communication protocol **characterized by** the following steps:
- organizing the web resources to be accessed by the telecommunication wireless device in a hierarchical structure with an NFC Web record at the top level,
- identifying said NFC Web record as a URT having a syntax adapted for triggering said Telecommunication wireless device to locally access to said web resources totally or partly, straight off or in several attempts.

**2.** Protocol according to claim 1 wherein said hierarchical structure comprises a first node representing a record identified by an absolute URI and child nodes representing records identified by either relative or absolute URIs.

**3.** Protocol according to claim 2 wherein the absolute URIs are in the form of [Protocol]://localhost/[access-path].

**4.** Protocol according to claim 2 wherein said first node identified by an absolute URI is an NFC Web record which contains a list of records.

**5.** Protocol according to claim 4 wherein said list of records comprises at least an NFC web record having a data structure identical to said NFC web record, and/or at least a resource records designed according to NDEF format.

**6.** Protocol according 5 wherein said NFC Web record is defined as a NDEF record of TNF field value type as defined by NDEF specification and RTD Specification.

**7.** Protocol according to claim 5 wherein each Resource record further comprises a media-type record identifying a web resource type and storing said web resource.

**8.** Protocol according to claim 7 wherein each of said Resource records comprises further at least a meta-information record that provides extra information about said Resource record such as compression type, related authorization.

**9.** Protocol according to claim 6 wherein said media-type record is a NDEF record as defined in NDEF specification, using a media as defined in RFC 2046 type.

**10.** Protocol according to claim 4 wherein said NFC Web record data structure comprises:
- a field IL set to "1" in order to enable use of the ID Field,
- a specific ID Field composed of:
• a first one byte field for an identifier Code value which identifies the protocol used,
• a second one byte field for the e_path Code value which identifies the smartcard before the system fetches the resource in the rest of the path, and
• a third N bytes field (The rest of the path Code value) which indicates the rest of the URI (N = ID Length - 2).
- a type field the value of which indicates that the NDEF record is a NFC Web Record.
- a payload the content of which consists in NFC Web records and/or Resource records it does not assume any particular order.

**11.** Protocol according to claim 9 wherein said Resource Record data structure comprises:
- a field IL set to "1" in order to enable use of ID Field,
- a specific ID Field for referencing a web resource as a Uniform Resource Identifier, said ID Field of size ID_Length comprising:
• a first one byte field for the identifier Code value which identifies the protocol used.
• a second one bytefield for the e_path Code value which identifies the smartcard before the system fetches the resource in the rest of the path,
• a third N bytes field (The rest of the path Code value) which indicates the rest of the URI (N = ID_Length - 2).
- a type field the value of which indicates that the NDEF record is a Resource Record,
- a payload the content of which consists in a Mime Type record as defined in NFC Forum specifications and extra Meta-Information records as specified in present invention.

**12.** Protocol according the claim 8 wherein said Meta-Information Record comprises:
- a type field the value of which indicates that the NDEF record is a Meta Information Record.
- a payload whose structure is defined such as it allows storage of any extra information about a web resource, said structure being composed of:
• One first byte for the protocol name field for identifying the protocol used to transport the meta-information associated to the resource,
• One second byte for the meta-information type field for identifying the meta-information type,
• One third N bytes for the meta-information type value field that gives the value associated to the meta-information type field (N = Payload Length - 2).
- a payload, which is not a NDEF message, for indicating the transport mode, the type, and the value of said meta-information.

**13.** Protocol according to claims 5 wherein said NFC web record may be at the top level of a NDEF message or included in the Smart Poster record as defined in NFC Smart Poster Record Type Definition technical specification.

**14.** Protocol according to claim 1 wherein the NFC web hierarchical structure is designed such that it supports ISO7816-4 files references.

**15.** Protocol according anyone of claim 1 to 13, **characterized in that** it allows the telecommunication wireless device to access to specific web resources identified by ISO7816-4 files references and stored in an ISO7816-4 file storage area.

**16.** Protocol according to claims 15 wherein the telecommunication wireless device is a mobile phone, pocket PC or a laptop and the remote contactless device is a smartcard, a memory card or a second telecommunication wireless device.

**17.** Protocol according to claim 1 adapted to enable local web server to support the HTTP transport protocol.

**18.** Protocol according to claims 1, adapted to enable local web server to support the FTP transport protocol.

**19.** Protocol according to claims 1, adapted to enable local web server to support the RTP transport protocol.

**20.** Protocol according to claims 1 adapted to enable local web server to support the RTSP transport protocol.

**21.** A telecommunication wireless device supporting a local web server adapted for allowing access to web resources having different types stored in a remote contactless device, said telecommunication device **characterized in that** it comprises means for accessing to said web resources locally, totally or partly, straight off or in several attempts.

**22.** A Remote contactless device comprising web resources having different types accessible by a telecommunication wireless device supporting a local web server, **characterized in that** it comprises means for organizing said web resources in a hierarchical structure with an NFC Web record at the top level,
- means for identifying said web resources as a URI adapted for triggering said Telecommunication wireless device to locally access to said web resources totally or partly, straight off or in several attempts.
